# EUROPÄISCHE PATENTSCHRIFT

(11) **EP 0 860 594 B1**
(45) Veröffentlichungstag und Bekanntmachung des Hinweises auf die Patenterteilung: **06.03.2002**
(21) Anmeldenummer: 98102071.2
(22) Anmeldetag: 06.02.1998
(51) Int. Cl.: F02D 41/02, F01N 3/08

(54) **Verfahren zur Regeneration einer Stickoxidfalle im Abgassystem eines Verbrennungsmotors sowie Vorrichtung zur Durchführung des Verfahrens**
Regeneration method of a nitrogen oxides trap in the exhaust system of a cobustion engine and device for carrying out this method
Procedé de régénération d' un piège pour les oxydes d'azote placés dans le système d'échappement d'un moteur à combustion et dispositif pour la mise en oeuvre de ce procédé

(30) Priorität: 20.02.1997 DE 19706607
(43) Veröffentlichungstag der Anmeldung: 26.08.1998
(73) Patentinhaber: Ford Global Technologies, Inc. Suite 611, Parklane Towers East,, Dearborn, Michigan 48126 (US)
(72) Erfinder: Dickers, Guido, 41068 Mönchengladbach (DE); Phlips, Patrick, Dr., 50585 Köln (DE); Henning, Manfred, 40667 Meerbusch (DE); Grieser, Klemens, 40764 Langenfeld (DE)
(74) Vertreter: Bonsmann, Manfred, Dipl.-Ing.

(56) Entgegenhaltungen:
- EP-A- 0 732 485
- US-A- 5 437 153
- PATENT ABSTRACTS OF JAPAN vol. 096, no. 003, 29.März 1996 & JP 07 305644 A (MITSUBISHI MOTORS CORP), 21.November 1995,
- PATENT ABSTRACTS OF JAPAN vol. 097, no. 003, 31.März 1997 & JP 08 296471 A (NISSAN MOTOR CO LTD), 12.November 1996,
- PATENT ABSTRACTS OF JAPAN vol. 018, no. 548 (M-1689), 19.Oktober 1994 & JP 06 193487 A (TOYOTA MOTOR CORP), 12.Juli 1994,
- PATENT ABSTRACTS OF JAPAN vol. 018, no. 389 (M-1642), 21.Juli 1994 & JP 06 108824 A (TOYOTA MOTOR CORP), 19.April 1994,

## Beschreibung

Die Erfindung betrifft ein Verfahren zur Regeneration einer Stickoxidfalle im Abgassystem eines Verbrennungsmotors mit Einrichtungen zur Beeinflussung des zugeführten Luftmassenstroms und der eingespritzten Kraftstoffmenge, bei dem zum Zwecke der Einleitung bzw. Beendigung eines bei einem fetten Luft-/Kraftstoffverhältnis durchgeführten Regenerationzyklus die eingespritzte Kraftstoffmenge verändert wird.

Der Einsatz einer derartigen Stickoxidfalle (NO_{X}-Trap) im Verbund mit einem konventionellen Dreiwegekatalysator erfolgt bevorzugt bei Kraftfahrzeugen, deren Verbrennungsmotor für einen Magerbetrieb ausgelegt ist (sog. lean burn engine). Die Stickoxidfalle verringert insbesondere im Magerbetrieb auftretende Stickoxidemissionen, indem Stickoxidmoleküle an der Beschichtung der Falle angelagert und somit aus dem Abgas entfernt werden. Die angelagerten Stickoxide werden unter Einwirkung eines Katalysators zu Stickstoff und Sauerstoff aufgespalten, wobei der Sauerstoff mit überschüssigem Wasserstoff oder CO zu Wasser bzw. CO₂ verbrannt wird. Diese Aufspaltungsreaktionen können jedoch bei den im Mager- oder stöchiometrischem Betrieb des Motors herrschenden Abgasbedingungen nicht bzw. nur in sehr geringem Umfange erfolgen. Stattdessen lagern sich die Stickoxide an der Falle an, bis ein Sättigungsgrad erreicht ist, so daß die Reinigungseffizienz der Stickoxidfalle stark abnimmt.

Deshalb ist es bekannt, die Stickoxidfalle in regelmäßigen Abständen einem Regenerationszyklus zu unterziehen, indem nach Ablauf einer vorgegebenen Zeit mit Betrieb bei mageren oder stöchiometrischen Luft-/Kraftstoffverhältnissen die Aufspaltung der gespeicherten Stickoxide durch kurzzeitige starke Überfettung des Luft-/Kraftstoffgemisches erreicht wird. Beispielsweise kann hierzu vorgesehen sein, den Motor statt mit lambda = 1,6 (Magerbetrieb) alle 60 s für eine Dauer von 0,5 bis 1 s mit lambda = 0,75 (stark überfettet) zu betreiben, wobei lambda das auf das stöchiometrische Verhältnis normierte Luft-/Kraftstoffverhältnis bedeutet.

Diese zur Regeneration erforderliche zyklische Überfettung führt zu einem erhöhten Treibstoffbedarf. Es ist erstrebenswert, den zusätzlichen Kraftstoffverbrauch durch diese Regenerationszyklen zu minimieren und damit die Gesamteffizienz des Stickoxidfallensystems zu verbessern.

Ein weiteres Problem bei bekannten Regenerationsverfahren für Stickoxidfallen liegt darin, daß bei diesen Verfahren die kurzzeitige Überfettung durch Erhöhen der Treibstoffzufuhr erreicht wird. Dies führt zu einer typischerweise um 30% bis 40% stärkeren Drehmomentabgabe des Verbrennungsmotors, die trotz ihrer kurzen Dauer zu einer vom Fahrer bemerkbaren Geschwindigkeitsänderung führen kann. Insbesondere bei niedrigen Geschwindigkeiten (z.B. Schritttempo) sind derartige ruckartige Geschwindigkeitsänderungen nicht akzeptabel. Deshalb wird bisher die erhöhte Drehmomentabgabe durch künstliche Verschlechterung des Motorwirkungsgrades mittels einer Veränderung des Zündwinkels kompensiert. Ein derartiges Vorgehen ist zum Beispiel aus dem PATENT ABSTRACTS OF JAPAN vol. 018, no. 389 (M-1642), 21. Juli 1994 & JP 06 108824 A (TOYOTA MOTOR CORP), 19. April 1994, bekannt. Dies führt jedoch zu einem hohen Kraftstoffverbrauch.

Das PATENT ABSTRACTS OF JAPAN vol. 096, no.003, 29.März 1996 & JP 07 305644 A (MITSUBISHI MOTORS CORP), 21. November 1995, hat eine Verringerung des Kraftstoffverbrauches und der Drehmomentänderung während der Regeneration einer Stickoxidfalle zum Ziel und versucht dies dadurch zu erreichen, dass die von der Stickoxidfalle abgegebene NOx-Menge abgeschätzt wird. Der Beginn von Regenerationszyklen kann dadurch dem Beladungsgrad der Stickoxidfalle besser angepasst werden, so dass das zu frühe oder zu späte Durchführen von Regenerationen vermieden werden kann.

Auch gemäß dem PATENT ABSTRACTS OF JAPAN vol. 097, no.003, 31. März 1997 & JP 08 296471 A (NISSAN MOTOR Co. LTD), 12. November 1996, wird eine Überwachung der von einer Stickoxidfalle abgegebenen NOx-Menge eingesetzt. Der während eines Regenerationszyklus notwendige Übergang zu einem fetteren Luft-/Kraftstoffgemisch findet dabei stetig mit einer bestimmten Anreicherungsrate statt, wobei letztere auf der Basis der gemessenen NOx-Abgabe der Stickoxidfalle bestimmt wird.

Das PATENT ABSTRACTS OF JAPAN vol. 018, no.548 (M-1689), 19. Oktober 1994 & JP 06 193487 A (TOYOTA MOTOR CORP), 12. Juli 1994, beschreibt eine Festsetzung des fetten beziehungsweise mageren Luft-/Kraftstoffgemisches vor beziehungsweise während einer Regeneration derart, dass die damit erzeugte Drehmomentabgabe in etwa gleich bleibt.

Die EP 0 732 485 A2 beschäftigt sich mit der Regeneration einer Stickoxidfalle an einem Dieselmotor. Dabei wird der Verbrennungsmodus im Zylinder in bestimmter Weise umgeschaltet, um zur Regeneration einer Stickoxidfalle ein fettes oder zumindest stöchiometrisches Luft-/Kraftstoffverhältnis im Abgas einzustellen. Zur Reduzierung von Drehmomentstößen wird dabei die Verwendung eines besonders fetten Luft-/Kraftstoffverhältnisses vorgeschlagen, so dass der Regenerationszyklus sehr kurz gehalten werden kann.

Die US 5 437 153 offenbart ein Verfahren, bei welchem die Beladung der Stickoxidfalle abgeschätzt und eine Regeneration nur dann eingeleitet wird, wenn diese aufgrund der abgeschätzten Beladung notwendig ist. Zur Veränderung des Luft/Kraftstoffgemisches für die Regeneration wird die Menge des eingespritzten Kraftstoffes über die Dauer der Kraftstoffeinspritzung eingestellt.

Die Aufgabe der vorliegenden Erfindung besteht darin, ein Verfahren der eingangs genannten Art so zu verbessern, daß der durch die Regenerationszyklen entstehende Kraftstoffmehrverbrauch minimiert wird.

Zur Lösung dieser Aufgabe sind die Merkmale nach Anspruch 1 vorgesehen.

Die Änderung des dem Verbrennungsmotor zugeführten Luftmassenstroms erfolgt mittels der Einrichtung zur Beeinflussung des Luftmassenstroms, z.B. einer elektronisch ansteuerbaren Drosselklappe oder eines zu dem Luftströmungsweg einer konventionellen mechanischen Drosselklappe parallelgeschalteten, elektronisch ansteuerbaren Bypass-Ventils. Während des Regenerationszyklus wird der Luftmassenstrom derart verringert, daß sich trotz der größeren Kraftstoffzufuhr das abgegebene Drehmoment nicht oder zumindest nicht in einem vom Fahrer wahrnehmbaren Maße ändert. Somit ist keine künstliche Wirkungsgradverschlechterung erforderlich; stattdessen kann der Motor auch während der Regeneration mit einem für das Regenerations-Luft-/Kraftstoffverhältnis optimalen Wirkungsgrad betrieben werden.

Zur Regeneration der Stickoxidfalle wird das, erforderliche Luft-/Kraftstoffverhältnis mittels eines funktionalen Zusammenhangs in Abhängigkeit von der Abgastemperatur im Bereich der Stickoxidfalle und dem Abgasmassenstrom bestimmt wird. Das Regenerations-Luft-/Kraftstoffverhältnis wird so bestimmt, daß eine vollständige Regeneration mit einer möglichst geringen Überfettung erreicht werden kann. Bei höherer Abgastemperatur und größerem Abgasmassenstrom ist die erforderliche Überfettung tendenziell kleiner. Der genannte funktionale Zusammenhang, wie auch die weiteren nachfolgend genannten funktionalen Zusammenhänge, werden zweckmäßigerweise mittels Versuchsreihen gewonnen und in Form einer an die Versuchsergebnisse angepaßten mathematischen Funktion oder mittels eines mehrdimensionalen Tabellenspeichers implementiert. Die Abgastemperatur und der Abgasmassenstrom im Bereich der Stickoxidfalle werden auf bekannte Weise mittels Messungen bzw. Berechnungen (beispielsweise auf der Grundlage der eingespritzten Kraftstoffmenge und des Luftmassenstromes) ermittelt.

Bei einer zur Durchführung des Verfahrens geeigneten Vorrichtung zur Regeneration einer Stickoxidfalle im Abgassystem eines Verbrennungsmotors durch einen bei einem fetten Luft/Kraftstoffverhältnis durchgeführten Regenerationzyklus mit Einrichtungen zur Dosierung des dem Verbrennungsmotor zugeführten Luftmassenstroms und der eingespritzten Kraftstoffmenge und einer elektronischen Steuereinheit zur Steuerung dieser Dosiereinrichtungen in Abhängigkeit von einer Vielzahl von Motorparametern ist vorgesehen, daß die Steuereinheit Einrichtungen zur Initiierung des Regenerationszyklus mit einer Einheit zur näherungsweisen Bestimmung der aktuellen Aufnahmerate von Stickoxiden durch die Stickoxidfalle, mit einer Einrichtung zur Integration dieser Aufnahmerate, einer Vergleichseinrichtung zum Vergleich der integrierten Aufnahmerate mit einem Schwellwert und zum Initiieren des Regenerationszyklus, wenn der Schwellwert überschritten ist und mit einer Einrichtung zum Rücksetzen der integrierten Aufnahmerate nach Beendigung des Regenerationszyklus aufweist.

Damit wird erreicht, daß ein Regenerationszyklus nur dann initiiert wird, wenn dies auch erforderlich ist. Bei Lösungen nach dem Stand der Technik wird demgegenüber der Regenerationszyklus in festen Zeitabständen, z.B. alle 60 s, ausgeführt. Da der tatsächliche Füllungsgrad der Stickoxidfalle aber abhängig von den Motorbetriebsbedingungen variiert, kann es bei den bekannten Lösungen entweder zu unnötig häufigen Regenerationen - verbunden mit erhöhtem Kraftstoffverbrauch - oder zu allzu seltenen Regenerationen - verbunden mit einer schlechteren Abgasreinigung - kommen . Demgegenüber wird bei der Erfindung die aktuelle Aufnahmerate der Stickoxidfalle an Stickoxiden näherungsweise bestimmt. Diese Rate wird in festgelegten Zeitabständen ermittelt und aufintegriert. Das Integral ist somit ein Maß für den Füllungsgrad der Stickoxidfalle. Dieses Integral wird mit einem Schwellwert verglichen. Bei Überschreitung des Schwellwerts ist die Falle gesättigt, und es wird dann ein Regenerationszyklus eingeleitet. Zum Abschluß des Regenerationszyklus wird das Integral entsprechend der nunmehr regenerierten Stickoxidfalle auf einen Ursprungswert (z.B. Null) zurückgesetzt. Somit erfolgt eine Regeneration dann und nur dann, wenn diese auch wirklich erforderlich ist.

In vorteilhafter Ausgestaltung der Erfindung kann vorgesehen sein, daß die Einrichtung zur näherungsweisen Bestimmung der aktuellen Aufnahmerate von Stickoxiden zur Bestimmung dieser Aufnahmerate in Abhängigkeit von der aktuellen Drehzahl und dem Drehmoment des Verbrennungsmotors, dem Luft-/Kraftstoffverhältnis, sowie der Abgastemperatur und dem Abgasmassenstrom im Bereich der Stickoxidfalle ausgebildet ist. Die Einrichtung ist also zur Erfassung eines funktionalen Zusammenhangs ausgebildet, der eine näherungsweise Bestimmung der Aufnahmerate aufgrund der genannten Größen erlaubt.

Im Vollastbereich, also bei hohen Fahrzeuggeschwindigkeiten bzw. starken Beschleunigungen können die erforderlichen Motorleistungen nur durch Einstellung eines fetten Luft-/Kraftstoffverhältnisses erreicht werden. In diesem Betriebsbereich erfolgt eine Regeneration der Stickoxidfalle auch ohne einen expliziten Regenerationszyklus, so daß in vorteilhafter Ausgestaltung der Erfindung vorgesehen sein kann, das Integral für den Füllungsgrad der Stickoxidfalle bei Erkennung eines für eine vorherbestimmte Zeitspanne andauernden Vollastbetriebes des Verbrennungsmotors auf Null zurückzusetzen.

Weiterhin kann in vorteilhafter Ausbildung der Erfindung eine Einrichtung zur Bestimmung der Dauer des Regenerationszyklus in Abhängigkeit von der Abgastemperatur und dem Abgasmassenstrom im Bereich der Stickoxidfalle und dem zur Regeneration eingestellten Luft-/Kraftstoffverhältnis vorgesehen sein. Diese Einrichtung ist zur Erkennung eines funktionalen Zusammenhangs zur Bestimmung der Dauer des Regenerationszyklus ausgebildet, wodurch diese - im Gegensatz zu bekannten Lösungen mit festen Regenerationszeiten - abhängig von den individuellen Betriebsparametern mimimiert werden kann.

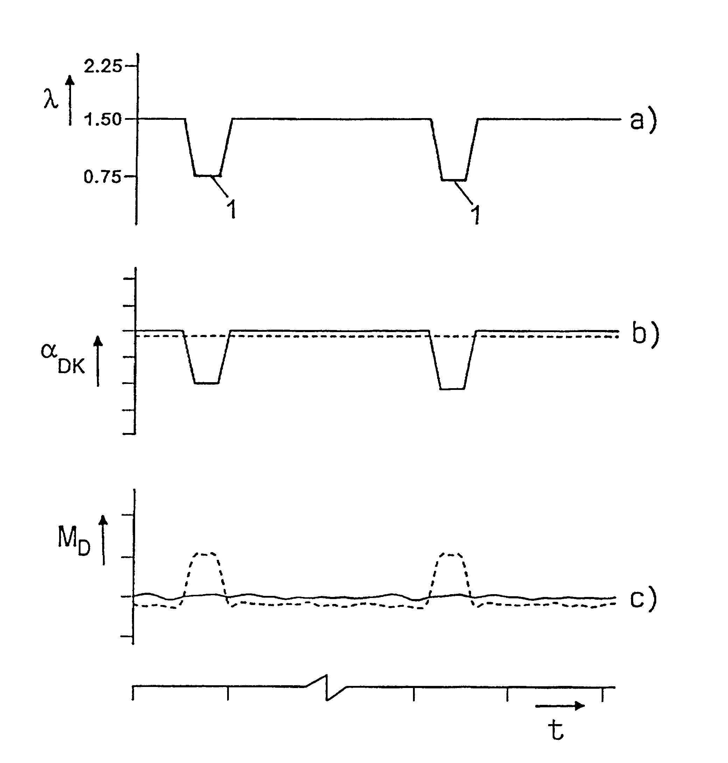

Die Erfindung wird nachfolgend anhand der Zeichnung beispielhaft erläutert.

Die einzige Figur zeigt schematisch den Ablauf eines erfindungsgemäßen Regenerationsverfahrens anhand von Diagrammen verschiedener Motorkenngrößen abhängig von der mit t bezeichneten Zeit.

Eine (nicht dargestellte) Vorrichtung zur Durchführung des Verfahrens weist einen Verbrennungsmotor mit einer Stickoxidfalle im Abgassystem auf. Der Verbrennungsmotor erhält Kraftstoff von einer Kraftstoffeinspritzanlage sowie Luft über eine elektronisch steuerbare Drosselklappe. Eine elektronische Motorsteuerung steuert die Einspritzanlage, die Drosselklappe, die Zündanlage etc. und erhält eine Vielzahl von Eingangssignalen, wie z.B. die Motordrehzahl, die Gaspedalstellung, die Abgastemperatur usw.. Aus diesen Eingangssignalen werden in bekannter Weise charakteristische Motorkenngrößen, z.B. das gewünschte Drehmoment, das Luft-/Kraftstoffverhältnis od. dgl. bestimmt.

Der Verbrennungsmotor arbeitet in dem in der Figur dargestellten Beispiel in einem Magerbetrieb mit einem Luft-/Kraftstoffverhältnis von lambda = 1,5 (Diagramm a). Zur Regeneration der Stickoxidfalle sind Regenerationszyklen 1 vorgesehen, in denen ein fettes Luft-/Kraftstoffverhältnis von lambda = 0,75 eingestellt wird. Die Zeiten, nach deren Ablauf Regenerationen erforderlich sind, werden dadurch bestimmt, daß die Motorsteuerung abhängig von der aktuellen Drehzahl und dem Drehmoment des Verbrennungsmotors, dem Luft-/Kraftstoffverhältnis, sowie der Abgastemperatur und dem Abgasmassenstrom im Bereich der Stickoxidfalle mittels eines funktionalen Zusammenhangs die aktuelle Stickoxidaufnahmerate der Stickoxidfalle näherungsweise bestimmt. Diese wird zeitlich aufintegriert. Hat das Integral einen vorgegebenen Schwellwert überschritten, so signalisiert dies, daß die Aufnahmekapazität der Falle erschöpft ist, weshalb dann der Regenerationszyklus gestartet wird. Nach dem Regenerationszyklus wird das Integral auf den Wert Null gesetzt. Befindet sich der Motor für eine vorgegebene Zeit im Vollastbetrieb, wird das Integral ebenfalls auf Null gesetzt. Die Dauer des Regenerationszyklus und das hierzu eingestellte Luft-/Kraftstoffverhältnis werden in Abhängigkeit von der Abgastemperatur im Bereich der Stickoxidfalle und von dem Abgasmassenstrom bestimmt.

Während der Regenerationszyklen wird durch die Motorsteuerung mehr Kraftstoff eingespritzt, um ein fetteres Luft-/Kraftstoffverhältnis zu erreichen. Bei konstantem Drosselklappenwinkel α_{DK} (gestrichelte Linie in Diagramm b) resultiert daraus ein kurzfristig größeres Motordrehmoment M_{D} (gestrichelte Linie in Diagramm c). Um diese Drehmomentänderungen zu vermeiden, wird erfindungsgemäß der Drosselklappenwinkel und damit der Luftmassenstrom während der Regenerationszyklen derart verringert (durchgezogene Linie in Diagramm b), daß das Drehmoment im wesentlichen konstant bleibt (durchgezogene Linie in Diagramm c).

## Patentansprüche

1. Verfahren zur Regeneration einer Stickoxidfalle im Abgassystem eines Verbrennungsmotors mit Einrichtungen zur Beeinflussung des zugeführten Luftmassenstroms und der eingespritzten Kraftstoffmenge, bei dem zum Zwecke der Einleitung bzw. Beendigung eines bei einem fetten Luft-/Kraftstoffverhältnis durchgeführten Regenerationszyklus die eingespritzte Kraftstoffmenge verändert wird, **dadurch gekennzeichnet, daß** bei dieser Änderung der eingespritzten Kraftstoffmenge der dem Motor zugeführte Luftmassenstrom gleichzeitig derart verändert wird, daß die Drehmomentabgabe des Verbrennungsmotors während des Regenerationszyklus im Vergleich zur Drehmomentabgabe unmittelbar vor bzw. nach dem Regenerationszyklus im wesentlichen unverändert bleibt, und daß das zur Regeneration der Stickoxidfalle erforderliche Luft-/Kraftstoffverhältnis mittels eines funktionalen Zusammenhangs in Abhängigkeit von der Abgastemperatur im Bereich der Stickoxidfalle und dem Abgasmassenstrom bestimmt wird.

2. Verfahren nach Anspruch 1, wobei der Verbrennungsmotor eine elektronische Steuereinheit zur Steuerung der Einrichtungen zur Dosierung des dem Verbrennungsmotor zugeführten Luftmassenstroms und der eingespritzten Kraftstoffmenge in Abhängigkeit von einer Vielzahl von Motorparametern enthält, **dadurch gekennzeichnet, daß** die Steuereinheit eine Einrichtung zur Initiierung des Regenerationszyklus enthält, mit deren Hilfe die aktuelle Aufnahmerate von Stickoxiden durch die Stickoxidfalle näherungsweise bestimmt wird, diese Aufnahmerate integriert wird, die integrierte Aufnahmerate mit einem Schwellwert verglichen wird, der Regenerationszyklus initiiert wird, wenn der Schwellwert überschritten ist, und die integrierte Aufnahmerate nach Beendigung des Regenerationszyklus rückgesetzt wird.

3. Verfahren nach Anspruch 2, **dadurch gekennzeichnet, daß** die näherungsweise Bestimmung der aktuellen Aufnahmerate von Stickoxiden in Abhängigkeit von der aktuellen Drehzahl und von dem Drehmoment des Verbrennungsmotors, dem Luft-/Kraftstoffverhältnis sowie von der Abgastemperatur und dem Abgasmassenstrom im Bereich der Stickoxidfalle erfolgt.

4. verfahren nach Anspruch 2 oder 3, **dadurch gekennzeichnet, dass** die integrierte Aufnahmerate bei Erkennung eines für eine vorherbestimmte Zeitspanne andauernden Vollastbetriebes des Verbrennungsmotors rückgesetzt wird.

5. Verfahren nach einem der Ansprüche 1 bis 4, **dadurch gekennzeichnet, dass** die Dauer des Regenerationszyklus in Abhängigkeit von der Abgastemperatur und dem Abgasmassenstrom im Bereich der Stickoxidfalle und dem zur Regeneration eingestellten Luft-/Kraftstoffverhältnis bestimmt wird.

## Claims

1. Method of regenerating a nitrogen oxide trap in the exhaust system of a combustion engine with devices for influencing the air mass flow supplied and the quantity of fuel injected, wherein for the purpose of initiating or ending a regeneration cycle carried out with a rich air / fuel ratio the quantity of fuel injected is changed, **characterised in that** with this change in the quantity of fuel injected the air mass flow supplied to the engine is simultaneously changed, that the torque output of the combustion engine during the regeneration cycle in comparison with the torque output before / after the regeneration cycle remains essentially unchanged, and that the air / fuel ratio necessary for the regeneration of the nitrogen oxide trap is determined by means of a functional correlation depending upon the exhaust gas temperature in the area of the nitrogen oxide trap and the exhaust gas mass flow.

2. Method according to Claim 1, wherein the combustion engine contains an electronic control unit for controlling the devices for dosing the air mass flow supplied to the combustion engine and the quantity of fuel injected depending upon a multitude of engine parameters, **characterised in that** the control unit contains a device for initiating the regeneration cycle, with the assistance of which the current absorption rate of nitrogen oxides by the nitrogen oxide trap is approximately determined, this absorption rate is integrated, the integrated absorption rate is compared with a threshold value, the regeneration cycle is initiated, if the threshold value is exceeded, and the integrated absorption rate is set back at the end of the regeneration cycle.

3. Method according to Claim 2 **characterised in that** the approximate determination of the current absorption rate of nitrogen oxides takes place depending upon the current speed and the torque of the combustion engine, the air / fuel ratio as well as the exhaust gas temperature and the exhaust gas mass flow in the area of the nitrogen oxide trap.

4. Method according to Claim 2 or 3 **characterised in that** the integrated absorption rate is set back upon recognising a full load operation of the combustion engine for the predetermined period of time.

5. Method according to one of the Claims 1 to 4 **characterised in that** the duration of the regeneration cycle is determined depending upon the exhaust gas temperature and the exhaust gas mass flow in the area of the nitrogen oxide trap and the air / fuel ratio set for the regeneration.

## Revendications

1. Procédé de régénération d'un piège à oxydes d'azote dans le système d'échappement d'un moteur à combustion interne, équipé de dispositifs permettant d'influer sur le débit massique d'air amené et la quantité de carburant injectée, dans lequel, à des fins d'initiation ou d'arrêt d'un cycle de régénération réalisé avec un rapport enrichi de mélange air / carburant, on modifie la quantité de carburant injectée, **caractérisé en ce que**, lors de cette modification de la quantité de carburant injectée, le débit massique d'air amené est également modifié simultanément de façon telle que le couple moteur délivré par le moteur à combustion interne pendant le cycle de régénération reste essentiellement inchangé en comparaison avec le couple moteur délivré directement avant ou après le cycle de régénération, et que le rapport de mélange air / carburant nécessaire pour la régénération du piège à oxydes d'azote est déterminé au moyen d'un rapport fonctionnel en fonction de la température des gaz d'échappement dans la zone du piège à oxydes d'azote et du débit massique des gaz d'échappement.

2. Procédé selon la revendication 1, dans lequel le moteur à combustion interne contient une unité de commande électronique permettant de commander les dispositifs de dosage du débit massique d'air amené au moteur à combustion interne et de la quantité de carburant injectée en fonction d'une multitude de paramètres du moteur, **caractérisé en ce que** l'unité de commande contient un dispositif permettant d'initier un cycle de régénération à l'aide duquel le taux d'absorption actuel des oxydes d'azote par le piège à oxydes d'azote est déterminé de façon approximative, ce taux d'absorption est intégré, le taux d'absorption intégré est comparé à une valeur de seuil, le cycle de régénération est initié lorsque la valeur de seuil est dépassée, et le taux d'absorption intégré est réinitialisé à la fin du cycle de régénération.

3. Procédé selon la revendication 2, **caractérisé en ce que** la détermination approximative du taux d'absorption actuel des dioxydes d'azote est réalisée en fonction du régime actuel et du couple moteur du moteur à combustion interne, du rapport de mélange air/carburant ainsi que de la température des gaz d'échappement et du débit massique des gaz d'échappement dans la zone du piège à oxydes d'azote.

4. Procédé selon la revendication 2 ou 3, **caractérisé en ce que** le taux d'absorption intégré est réinitialisé lors de l'identification d'un régime à pleine charge du moteur à combustion interne se produisant pendant une durée prédéterminée.

5. Procédé selon l'une des revendications 1 à 4, **caractérisé en ce que** la durée du cycle de régénération est déterminée en fonction de la température des gaz d'échappement et du débit massique des gaz d'échappement dans la zone du piège à oxydes d'azote, et du rapport de mélange air / carburant réglé pour la régénération.
